Europäisches Patentamt

European Patent Office

Office européen des brevets

(11) Publication number : **0 683 096 A1**

(12) **EUROPEAN PATENT APPLICATION**

(21) Application number : **95303322.2**

(22) Date of filing : **17.05.95**

(51) Int. Cl.⁶ : **B64D 17/02**

(30) Priority : **17.05.94 GB 9409995**

(43) Date of publication of application :
**22.11.95 Bulletin 95/47**

(84) Designated Contracting States :
**AT CH DE ES FR GB IT LI**

(71) Applicant : **Campbell-Jones, Michael**
**Top Shop,**
**15 Broad Street**
**New Radnor, Powys LD8 2SP (GB)**

(71) Applicant : **McFadyen, Alexander Neil**
**56 St. Kingsmark Avenue**
**Chepstow, Gwent NP6 5LY (GB)**

(72) Inventor : **Campbell-Jones, Michael**
**Top Shop,**
**15 Broad Street**
**New Radnor, Powys LD8 2SP (GB)**
Inventor : **McFadyen, Alexander Neil**
**56 St. Kingsmark Avenue**
**Chepstow, Gwent NP6 5LY (GB)**

(74) Representative : **BROOKES & MARTIN**
**High Holborn House**
**52/54 High Holborn**
**London, WC1V 6SE (GB)**

(54) **Paraglider.**

(57) A parachute or paraglider has a stiffening spar or spars (10) which enable the fabrication and assembly of a parachuting or paragliding aerofoil of greater aspect ratio and/or aerodynamic stability than with the prior art. The spar or spars contribute significantly to the structural stiffness of the aerofoil in flight and is/are demountable for portability.

Figure 3

EP 0 683 096 A1

This invention relates to a parachute or a species of parachute commonly known as a paraglider.

A paraglider is a type of wing or aerofoil designed primarily to glide in aerial flight commencing from the ground rather than to arrest a person or object in free-fall.

A conventional paraglider (sometimes called a 'gliding parachute') includes a canopy in the form of a wing from which the pilot is suspended in a harness. The wing is inflatable in the sense that it is formed from upper and lower fabric panels and intermediate ribs dividing an internal chamber into inflatable cells. Inflation is effected by providing apertures in the region of the leading edge so that the cells are inflated by a 'ram-air' effect as the wing moves forwardly through the air. Examples of conventional paragliders are described in US Patents 4,684,082, 3,972,495 and WO 92/06004.

The efficiency of an aerofoil i.e. the amount of vertical height lost as a proportion of forward distance flown, depends among other things on the aspect ratio of the wing. The aspect ratio of the wing relates the length of the wing (i.e. longitudinally from wing tip to wing tip) to its width in a transverse direction. It is found by dividing the square of the wing span by the area.

In the case of a conventional parachute or paraglider the Aspect Ratio is limited by the ability of the wing to maintain its profile in flight, most often when flying through turbulent air. A wing's shape is normally maintained by certain forces and reactions arising from its steady passage through the air. If the Aspect Ratio is too great, the forces working the deform the wing become too great to be resisted and the inflated wing can collapse or partially deflate.

It is an object of the present invention to provide a paraglider which overcomes this problem.

According to the present invention, there is provided a paraglider comprising an inflatable wing from which a harness for the pilot or payload is suspended, the wing comprising upper and lower flexible surfaces, interconnected by rib members extending generally transversely of the wing, and apertures in the wing to admit inflation air, and at least one stiffening strut extending generally longitudinally of the wing, the strut permitting the wing in flight to bend about an axis extending transversely thereof but to a lesser degree than in the absence of such strut.

The strut or struts, which need not extend to the wing tips, extend generally longitudinally of the wing on each side of a transverse centre-line. The strut will normally be stiffer in a central region spanning the centre-line than at its ends. Preferably, the strut reduces in stiffness from the region of the centre-line towards its ends. This is most conveniently achieved by manufacturing the strut in such a way that it reduces in thickness from the centre towards the ends. Such reduction in thickness may be a gradual taper or a step-wise reduction in thickness

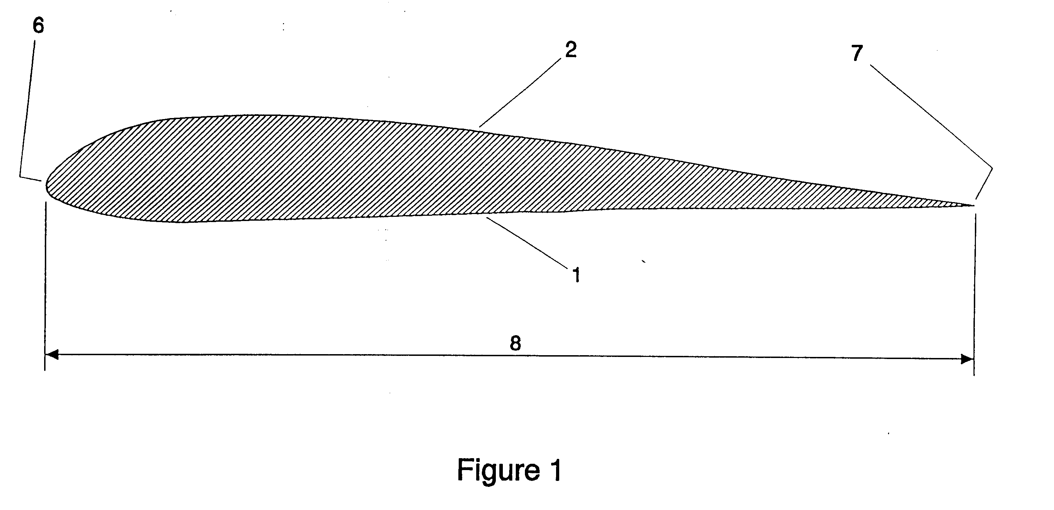

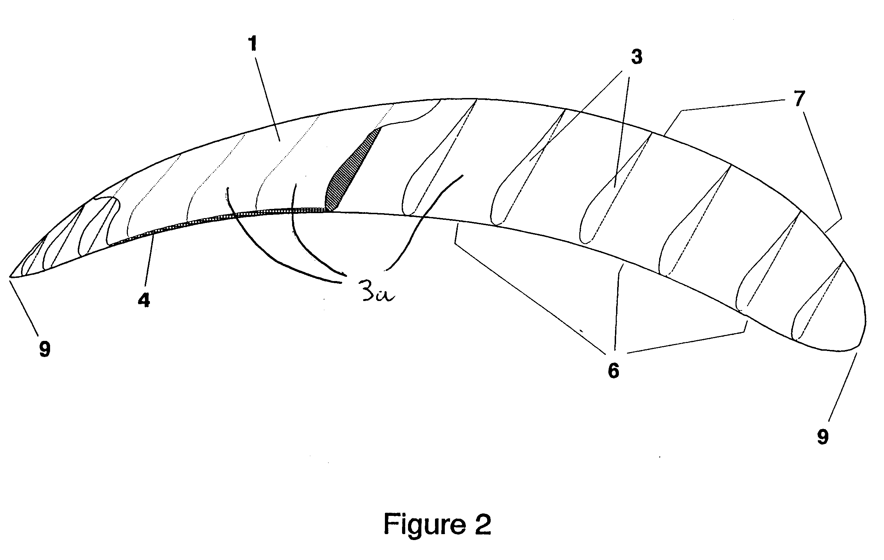

There follows a brief explanation of the design of paragliding aerofoils in order to put the invention in context. In the accompanying drawings Figures 1 and 2 illustrate features common to the prior art. The remaining Figures (3 to 5) relate to an example of the invention.

Summary of accompanying Figures:

Figure 1 shows the shape of an internal rib which is essentially the same shape as the aerofoil section. This Figure is typical of the prior art prior to the present invention.

Figure 2 shows an isometric sketch and cutaway view of a paraglider aerofoil of a type typical of the prior art.

Figure 3 is a typical section of the aerofoil of the invention showing the position of the spar relative to a typical rib and where the spar is fixed into the aerofoil.

Figure 4 is a plan on a typical rib near the centre of the span of the aerofoil illustrating the spar position and fixing details.

Figure 5 is an isometric sketch and cutaway view of the paraglider aerofoil showing a general view of the spar and its position.

The numerical references included in the following text are common to all drawings.

For the purposes of this application, transverse or lateral refers to a direction or alignment parallel to the direction of flight and longitudinal refers to a horizontal direction or alignment perpendicular to the line of flight.

Referring to Figures 1 and 2, paragliders normally comprise a fabric wing with a top and bottom surface (1 and 2) interconnected by ropes or fabric panels known as ribs (3). The interconnecting ribs form a number of transverse pockets or cells (3a). The ribs may be solid but are more often perforated in some way to allow movement of air between the cells.

The shape of this wing is maintained in flight by internal pressure generated by forward movement of the wing through the air. This principle is known as the ram-air effect. The pressurising air may enter the wing via several means, the principal route being by open or gauze-covered apertures (4) in the vicinity of the front or leading edge (6) of the aerofoil.

The pilot or payload is suspended beneath the wing in normal flight by means of several ropes or lines (5, 15 & 16) terminating in a harness (not shown). Lines (5 and 15) are suspension lines while line (16) is connected to the trailing edge at 2 or more positions and can be used by the pilot to control the rate of descent and direction by appropriate deformation of the trailing edge.

For further structural details of conventional paragliders, reference is made to US Patents Nos. 4,684,082, 3,972,495 and WO 92/06004.

The aerial performance of a paraglider is determined by many factors and a primary factor is the geometry of its aerofoil.

Some relevant aspects of the performance of an aerofoil are described or defined as follows:

1. The distance covered along the line of flight compared to its loss of altitude in still air (Glide Ratio).

2. Its forward velocity relative to the surrounding air (Airspeed).

3. The quantity and nature of drag experienced by the aerofoil compared to its airspeed.

4. Its inherent and dynamic safety and predictability in a variety of air conditions.

Some of the methods of describing the construction and geometry of a paragliding parachute are:

1. Chord length (8)

The distance from the leading (6 - see Fig. 1 ) to trailing edge (7) of an aerofoil section, measured along the straight line joining them.

2. Aspect Ratio, A

The way of describing the length of the span compared to the (mean) chord length or standard mean chord (SMC) of an aerofoil surface. The greater the Aspect Ratio, the greater the wing span compared to its Chord length.

In the field of aerodynamics, it is accepted that an increase in the Aspect Ratio of a given aerofoil will enable it to glide with greater efficiency. This will usually give rise to an enhancement of the glide ratio of the aerofoil.

The Aspect Ratio of paragliders and parachutes in the prior art is limited by the aerofoil's ability to keep its shape in flight and particularly in turbulent air. Hitherto, most paraglider designs have predominantly relied upon the inflation pressure generated by the ram-air effect, pressures generated by acceleration of air over and under the wing section and reactions produced by the payload to maintain the correct wing profile. With such a wing, if the Aspect Ratio is increased too much the forces working to deform the wing, primarily about a vertical axis, become too great to be resisted by these stabilising influences.

This invention circumvents the above problem by enhancing the rigidity of the inflated wing with a structural spar(10) or spars.

An important aspect of this invention is that the spar or spars should not contribute to instability or be able to produce undesirable alternative stable configurations in flight. One method of avoiding such instability would be to arrange the spar or spars so that they act to reduce in structural stiffness between the centre of the wing and both wing-tips (9). Thus, the wing tips of such a wing that have been deformed in flight by, say, turbulent air, will be subject to restoring forces that increase as alternative and otherwise stable configurations develop. A spar or arrangement of spars acting with constant structural stiffness could not be guaranteed to behave in this way.

The spar or spars should be continuous in effect across the major part of the wing span and be placed virtually symmetrically about the vertical centre-line of the aerofoil. In this manner, a parachuting or paragliding wing may be constructed whose Aspect Ratio and hence aerial performance is significantly enhanced compared to designs not so endowed.

In addition, the increase in rigidity so imparted to the aerofoil will have the effect of reducing the aerofoil's tendency to deflate or distort in turbulent air conditions, consequently improving its aerodynamical stability in flight. It follows that an otherwise unmodified aerofoil of the prior art would also benefit from the presence of a spar or spars arranged according to the invention.

A further possible consequence of this invention is that fewer suspension lines will be required to maintain the correct profile of the aerofoil. The consequential reduction in drag would, in turn, lead to an improvement in the aerial performance of the aerofoil.

A desirable but optional feature of the invention is that the spar or spars shall be arranged to reduce in structural stiffness starting from the centre of the aerofoil and proceeding towards either wing tip in a continuous or non-continuous manner. This may be achieved, for instance, by tapering the spar between the centre of the wing and the wing tips.

Where more than one spar is used, the preferred composite effect of the group should be to reduce in structural stiffness starting form the centre of the aerofoil and proceeding towards either wing tip in a continuous or non-continuous manner. This may be achieved by employing spars having a stiffness which varies over its length (variable stiffness), and/or varying the lengths of different spars of constant or variable stiffness.

For the purposes of the present invention, the spar or spars may be placed within the aerofoil section, or on, within or adjacent to its outer surface. However, it is currently preferred to position the spar or spars within the aerofoil so as not to interfere with air flow over its surface.

The spar or spars may be fabricated from a carbon-fibre or glass-fibre composite, polymer, metal or metal alloy, preferably a light alloy, e.g. aluminium alloy, or any other material or combination of materials. The spars may be partially or wholly solid in cross-section or may be tubular or a composite of solid and tubular construction. Solid construction in the central region may be adopted to give greater stiffness in this area. Preferably, the spars are of rounded shape when viewed in section, e.g. circular or elliptical.

In order not to significantly reduce the portability of the paraglider or parachute, any given spar may be assembled from a number of shorter lengths provided the characteristics described above are maintained. Thus, the spar or spars may be joined together, e.g. by ferrules or other linkages in an analogous manner to a fishing rod. It is highly desirable that the paraglider should be readily assembled and disassembled for easy transportation to and from a launch site. For this purpose, apertures may be provided in the top or bottom surfaces (preferably the latter) for introducing the spar or spars. These may be inserted in sections which are joined together by suitable linkages, conveniently in the vicinity of an aperture. After assembling the spar or spars within the aerofoil, the access apertures may be closed with flaps using Velcro or other fastenings. After removal of the spars, the aerofoil should be capable of being folded to form a portable package. The spar sections may be colour-coded, e.g. at their ends, to guide assembly.

The desired stiffness of the spar or spars will depend on the desired aspect ratio, the length of the wing, the number of spars and whether they are independent or linked together to form a framework with transverse ribs or battens. Stiffness of a strut is a function of cross-sectional area and Youngs modulus of the material. The stiffness should be such that after application of the kind of forces normally experienced by a paraglider in flight, the spar will return to its original rest position without bending or flipping over into a second stable or meta-stable position.

For the purposes of this invention, stiffness of a single spar or composite stiffness of a group of spars taken about any sectional axis should be at least 2 Nm$^2$ (international SI units) at the stiffest position (generally the aerofoil centre-line) for all stiffening members crossing the wing section at that position.

$$\text{Stiffness, } k = EI$$

Where

E = Young's modulus of the spar material along the spar's major dimension and

I = The moment of inertia of the section of the spar cross-section. Where more than one spar is employed, this is a composite figure. Preferably, the stiffness is greater than this figure, e.g. 5, 10 Nm$^2$, 50 or 100 Nm$^2$ or greater.

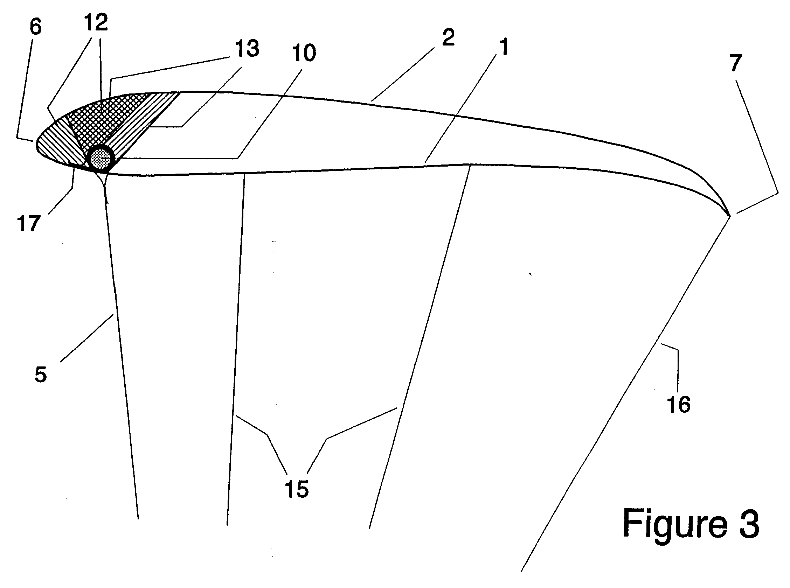

A specific embodiment of the invention will now be described by way of example with reference to Figures 3 to 5. The example is of a paraglider stiffened by means of a single spar in which:

Figure 3 is a typical section of the aerofoil of the invention showing the position of the spar relative to a typical rib and where it is fixed into the aerofoil.

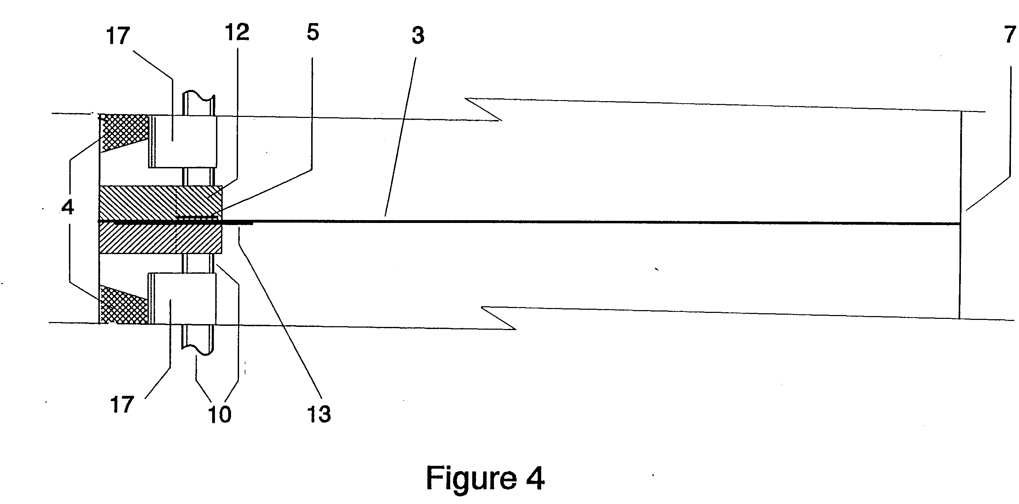

Figure 4 is a plan on a typical rib near the centre of the span of the aerofoil illustrating the spar position and fixing details.

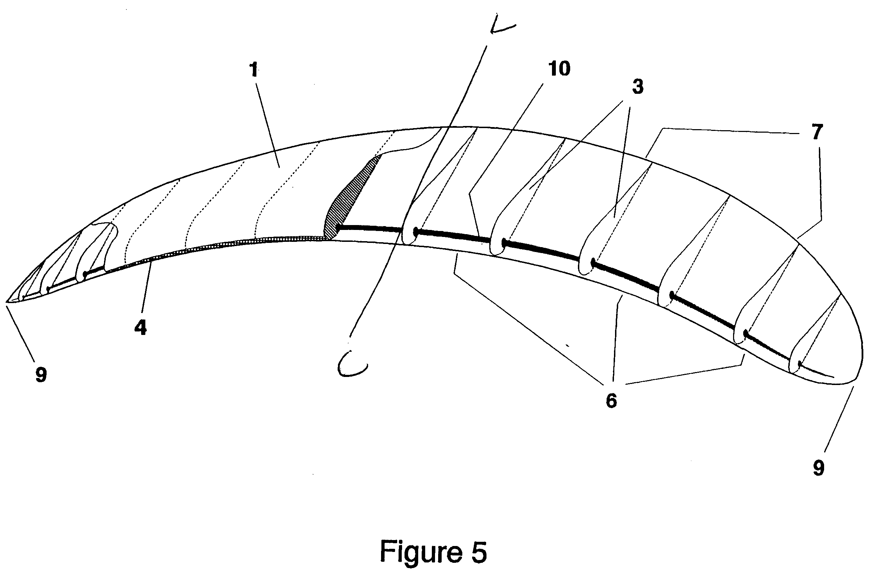

Figure 5 is an isometric sketch and cutaway view of the paraglider aerofoil showing a general view of the spar and its position.

In Figures 3 to 5, the same reference numerals as in Figures 1 and 2 are used to refer to common parts.

As with a paraglider of the prior art, the top and bottom surfaces (2) and (1) are separated by a series of ribs (3) of varying section which, across the span of the wing, defines its inflated shape.

Suspension lines are attached at transverse positions coincident with internal ribs. In this example, four are shown attached to each rib (Figure 3). Each line terminates at the lower end in a paragliding harness of design according to the prior art.

The aerofoil surfaces and internal ribs may be fabricated from nylon, polyester, mylar or any similarly appropriate fabric or film.

The suspension lines may be fabricated from kevlar, nylon or any similarly appropriate material.

The spar (10) is located in position by a series of sleeves (17) located in each cell. The sleeves restrain the spar longitudinally preventing displacement towards the trailing edge (7) of the aerofoil; these are sized to match the external diameter of the spar at each cell location and may be sewn or bonded to the fabric surface (1). Displacement of the spar towards the leading edge (6) and upwards is controlled by a series of high-density foam inserts (12), e.g. of rigid polyester, polyolefin, or polyurethane closed cell foam. The inserts (12) are restrained by pockets on either side of each rib (3). The inserts are profiled to match the shape of the leading edge of the aerofoil and help to maintain the shape of the leading edge.

Upward displacement of the spar relative to the aerofoil is further restrained by the load on the front suspension lines (5). These encircle the spar at each rib position and are sewn into the rib for ease of pre-flight assembly.

Where additional longitudinal spars are employed, these may be aligned with other suspension lines such as (15) and connected to the corresponding suspension line in a similar way.

Each rib has an aperture to allow the spar to pass through during pre-flight assembly and is reinforced in a roughly triangular pattern towards the top surface by a gusset (13) of mylar, heavy nylon or a similar material to mitigate distortion of the rib under conditions of flight. The gusset (13) preferably extends between foam inserts (12).

The spar is tapered between the centre of the aerofoil and the wing tips and is fabricated from several lengths of carbon-fibre tubing which are joined during pre-flight assembly. Stiffness is maintained across each joint by an internal concentric tube of an external diameter to match the internal diameter of the spar at the joint location. Each tube is permanently fixed by insertion into one of the sections of the spar and is a tight fit to its adjoining section.

During pre-flight assembly, the spar is introduced into the aerofoil through an opening in the centre of the bottom surface beneath the final spar position. This may be sealed with Velcro closures or similar after entry of the spar.

The spar is restrained laterally along most of its length by the constraining or 'wedge' effect of arranging the restraining sleeves (17) to be of an internal diameter that reduces towards the aerofoil wing tips (9).

Transverse battens may be inserted into pockets of the bottom surface (1) to assist in maintaining the aerofoil profile.

In a typical construction, the strut or struts may be about 10 to 50 mms in thickness or diameter in the central region and taper to zero at or towards the wing tips. However, where a plurality of struts are employed they may generally be smaller, e.g. from about 2 to 15, e.g. 3 to 10 mms in thickness or diameter.

In the case where the struts are in sections in the wing, they may not necessarily be joined together to form a continuous strut. In one embodiment, the struts could be inserted in pockets and may overlap.

The use of a plurality of struts may be preferable because the stiffness of the structure is not prejudiced by breakage of one strut. Where there are more than one strut, they may be linked to transverse battens, e.g. at the wing tips.

The struts need not be parallel to each other but could, for example, converge towards the wing tips.

## Claims

1. A paraglider comprising an inflatable wing from which a harness for the pilot or payload is suspended, the wing comprising upper and lower flexible surfaces (1,2) interconnected by rib members (3) extending generally transversely of the wing and parallel to the general direction of flight, and apertures (4) in the wing to admit inflation air, and at least one stiffening strut (10) extending generally longitudinally of the wing, the strut permitting the wing in flight to bend about an axis extending transversely thereof but to a lesser degree than in the absence of such strut.

2. A paraglider comprising an inflatable wing from which a harness for the pilot or payload is suspended, the wing comprising upper and lower flexible surfaces (1,2) interconnected by rib members (3) extending generally transversely of the wing and parallel to the general direction of flight and apertures (4) in the wing to admit inflation air and at least one strut (10) extending generally longitudinally of the wing on each side of a transverse centre-line (C-L), the strut being stiffer in the region of the centre-line than towards its ends, permitting the wing in flight to bend about an axis extending transversely thereof but to a lesser degree than in the absence of such strut.

3. A paraglider as claimed in claim 2 wherein the strut reduces in stiffness from the region of the centre-line towards the wing tips (9).

4. A paraglider as claimed in claim 3 wherein the strut tapers continuously or intermittently from the region of the centre-line towards the wing tips.

5. A paraglider as claimed in any one of the preceding claims in which there are a plurality of struts and the struts reduce in composite stiffness from the region of the centre-line towards the wing tips.

6. A paraglider as claimed in any one of the preceding claims wherein the strut is located within the wing in the region of the leading edge (6) thereof.

7. A paraglider as claimed in any one of the preceding claims wherein the strut is demountably assembled from a plurality of smaller spars sections.

8. A paraglider as claimed in any one of the preceding claims in which the strut is retained by sleeves (17) located in ribs or within the cells and positioned to restrain displacement of the strut towards the trailing edge.

9. A paraglider as claimed in any one of the preceding claims wherein the strut passes through one or more foamed plastics blocks (12,13) located in the leading part of the wing, thereby restraining displacement of the strut.

10. A paraglider as claimed in any one of the preceding claims wherein the wing includes one or more stiffening battens extending transversely thereof.

11. A paraglider as claimed in any one of the preceding claims wherein said harness is connected to the strut by a suspension line, thereby vertically restraining the strut within the rib section in flight.

12. A paraglider as claimed in any one of the preceding claims having two or more struts, said struts being linked at their ends in the region of the wing tips.

Figure 1

EP 0 683 096 A1

Figure 2

Figure 3

Figure 4

EP 0 683 096 A1

Figure 5

EP 0 683 096 A1

European Patent
Office

**EUROPEAN SEARCH REPORT**

Application Number

EP 95 30 3322

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO-A-89 07072 (SKYNASAUR INC)<br>* page 9, line 18 - line 26 *<br>* page 10, line 17 - line 20 *<br>--- | 1 | B64D17/02 |
| X | EP-A-0 023 137 (JONES)<br>* page 7, line 31 *<br>* page 11, line 18 - line 22 * | 2-4,6,7 | |
| A | * page 14, line 4 - line 7 *<br>--- | 9-11 | |
| X | US-A-5 213 289 (BARRESI)<br>* column 7, line 54 - column 8, line 27 *<br>--- | 1,2,8 | |
| A | FR-A-2 671 325 (DE NEUVILLE)<br>* figure 2 *<br>----- | 2,7 | |
| | | | **TECHNICAL FIELDS SEARCHED (Int.Cl.6)**<br><br>B64D |

The present search report has been drawn up for all claims

| Place of search | Date of completion of the search | Examiner |
|---|---|---|
| THE HAGUE | 25 July 1995 | Hauglustaine, H |

EPO FORM 1503 03.82 (P04C01)